# EUROPÄISCHE PATENTSCHRIFT

(11) **EP 4 307 508 B1**
(45) Veröffentlichungstag und Bekanntmachung des Hinweises auf die Patenterteilung: **05.08.2026**
(21) Anmeldenummer: 23181531.7
(22) Anmeldetag: 26.06.2023
(51) Int. Cl.: H02H 7/22, B60M 3/02, H02H 7/26, H02H 9/04, H02J 1/06

(54) **SCHUTZVORRICHTUNG ZUM SCHUTZ EINER ELEKTRISCHEN GLEISFELD-INFRASTRUKTUR, GLEISFELD-ENERGIEVERSORGUNGSEINRICHTUNG UND VERFAHREN ZUR BEGRENZUNG VON POTENTIALVERSCHIEBUNGEN IN EINER ELEKTRISCHEN GLEISFELD-INFRASTRUKTUR**
PROTECTION DEVICE FOR PROTECTING AN ELECTRIC TRACK-FIELD INFRASTRUCTURE, TRACK-FIELD POWER SUPPLY DEVICE AND METHOD FOR LIMITING POTENTIAL SHIFTS IN AN ELECTRIC TRACK-FIELD INFRASTRUCTURE
DISPOSITIF DE PROTECTION POUR PROTÉGER UNE INFRASTRUCTURE DE TERRAIN DE VOIE ÉLECTRIQUE, DISPOSITIF D'ALIMENTATION EN ÉNERGIE DE TERRAIN DE VOIE ET PROCÉDÉ POUR LIMITER DES DÉCALAGES POTENTIELS DANS UNE INFRASTRUCTURE DE TERRAIN DE VOIE ÉLECTRIQUE

(30) Priorität: 30.06.2022 DE 102022206731
(43) Veröffentlichungstag der Anmeldung: 17.01.2024
(73) Patentinhaber: Hitachi Rail GTS Deutschland GmbH, 71254 Ditzingen (DE)
(72) Erfinder: ZURFLUH, Erwin, 71254 Ditzingen (DE); SCHWEHN, Oliver, 71254 Ditzingen (DE)
(74) Vertreter: Kohler Schmid Möbus Patentanwälte

(56) Entgegenhaltungen:
- WO-A1-84/02807
- ES-A2- 2 532 288

## Beschreibung

### Hintergrund der Erfindung

Die Erfindung betrifft eine Gleisfeld-Energieversorgungseinrichtung (8, 8') umfassend eine DC-Speisung (11), mindestens eine DC-Versorgungsleitung (2, 2') und mindestens eine Schutzvorrichtung zum Schutz der elektrischen Gleisfeld-Infrastruktur vor AC-Beeinflussungsspannungen, ein Verfahren zur Begrenzung von Potentialverschiebungen in einer elektrischen Gleisfeld-Infrastruktur umfassend eine Speisung, mindestens eine DC-Versorgungsleitung und mindestens eine Schutzvorrichtung und ein Verfahren zur Begrenzung von Potentialverschiebungen in einer elektrischen Gleisfeld-Infrastruktur.

Eine Gleisfeld-Energieversorgungseinrichtung zur Versorgung von Feldelementen (Verbraucher im Gleisfeld) ist aus EP 3 247 015 A1 [1] bekannt.

Die Druckschrift WO 84/02807 A1 [5] offenbart ein Kabelschutzsystem für Hochspannungs-DC-Kabel.

Die Druckschrift ES 2 532 288 A2 [6] betrifft an einem Gleisfeld angeordnete Überspannungsschutzeinrichtungen.

Für den Fahrbetrieb mittels elektrischer Traktion wird entlang der Strecke eine Fahrdraht-Anlage, bestehend aus Unterwerkseinspeisung, Schaltposten, Masten und Fahrdraht (Oberleitung) eingerichtet. Das bedeutet, dass entlang der Strecke eine galvanisch durchverbundene, niederimpedante Leitung vorliegt. Beim elektrischen Zugbetrieb wird in vielen europäischen Ländern die Oberleitung für den Fahrstrom ab einem Unterwerk mit 15 kV 16.7 Hz einphasigen Wechselspannung versorgt. Der Rückstrom erfolgt in der Praxis zu etwa 1/3 über die Schiene, 1/3 über einen Rückleiter (Erdseil) und zu 1/3 über das Erdreich.

Die Speisungsabschnitte für den Fahrdraht können je nach Auslegung 10 bis 20 km lang sein. Die Beeinflussung wird daher über weite Strecken (Speisungsabschnitte) getragen. Die linearen stromtragenden Elemente (Fahrdraht, Schiene und Erdseil) bilden einen Ein-Windungstransformator gegenüber den Kabeln der Bahnsicherungstechnik, welche in den parallel geführten Kabelkanälen (Kabeltröge) liegen. Zwischen dem Fahrdraht und den rückstromführenden Leitern entstehen Magnetfelder, die in metallischen Anlageteilen Spannungen und Ströme induzieren. Man spricht von Beeinflussungsspannungen und -strömen. Besonders betroffen sind längsgeführte Leiter entlang der Bahnstrecke, z. B. Kabel der Energieversorgung und Ansteuerung für Feldelemente der Leit- und Sicherungstechnik.

Durch Beeinflussungsspannungen kommt es zu Potentialverschiebungen, wobei unter «Potentialverschiebungen» Verschiebungen der absoluten Spannung gegenüber Erdpotential hervorgerufen durch die Überlagerung von induzierten AC-Spannungsanteilen auf eine statische DC-Speisung zu verstehen sind.

Ein weiterer kritischer Fall, bei dem die höchsten Beeinflussungsspannungen entstehen, ist der 'Fahrleitungskurzschluss'. Ein Fahrleitungskurzschluss entsteht in den meisten Fällen durch einen auf die Schiene herabfallenden Fahrdraht, bspw. durch umgestürzte Bäume, Vereisungen und Strukturschäden an den Masten. Die Dauer dieser Kurzschlussströme beträgt je nach Schaltanlage 1 - 2 Perioden der 16.7 Hz Versorgung, das heisst 60-120 Millisekunden.

In der Richtlinie 819.0804 der DB [2] sind 250 VAC für Langzeitbeeinflussung (Fahrbetrieb) und 1500 VAC für Kurzzeitbeeinflussung (Fahrleitungskurzschluss) als Grenzwerte für den Anlagenschutz vorgegeben. Da die Beeinflussungsspannung abhängig von der Beeinflussungslänge ist, ist bei bekannten Gleisfeldanlagen in bestimmten Abständen (Stelldistanzen) eine galvanische Trennung der Stromversorgungs- und Steuerleitungen vorgesehen, um sicherzustellen, dass diese Werte nicht überschritten werden. Die bei Bahnanlage in diesem Zusammenhang relevanten Distanzen der galvanischen Trennungen (Stelldistanzen) sind typischerweise etwa 2,5 km, im Maximalfall bis zu 6,5 km. Diese galvanische Trennung erfolgt bei AC-Leitungen mittels Transformatoren und bei DC-Leitungen mittels Längsspannungsentkopplern (LSE) [3], [4]. Nachteilig hieran ist der hohe technische Aufwand für die potentialfreie Leistungsübertragung mit der dazugehörenden Überwachungseinrichtung in einem Schaltschrank auf der Strecke. Die zusätzliche Einrichtung reduziert ferner die Verfügbarkeit der Gesamtanlage.

Die aus [1] bekannte Energieversorgungseinrichtung umfasst eine durch Verbraucher-Busankoppelelemente segmentierte 2-polige Busleitung mit einer positiven und einer negativen Leitungsader. Die Verbraucher sind über die Verbraucher-Busankoppelelemente an die Busleitung angeschlossen. Die Energieeinspeisung erfolgt über mindestens ein Einspeise-Busankoppelelement. Die beiden Leitungsadern weisen zueinander eine tiefe Impedanz auf (Speisung) und werden mit Gleichspannung betrieben. Die aus [1] bekannte Energieversorgungseinrichtung ist ein Isolée Terre (IT)-System. Eine Begrenzung der überlagerten Beeinflussungsspannung erfolgt durch Begrenzung der galvanisch verbundenen Kabellänge (Beeinflussungslänge) und/oder durch Verwendung von kostspieligen Reduktionskabeln, welche durch einen speziellen Kabelmantelaufbau die induktive Einkopplung reduzieren. Eine Beeinflussungsspannung bewirkt daher eine Überlagerung der induzierten AC-Fahrdrahtspannung auf die DC Energieversorgungsspannung.

### Aufgabe der Erfindung

Es ist Aufgabe der Erfindung eine Schutzvorrichtung, eine Gleisfeld-Energieversorgungseinrichtung und ein Verfahren vorzuschlagen, die eine Begrenzung von Potentialverschiebungen in einer elektrischen Gleisfeld-Infrastruktur ermöglichen, insbesondere auch zur Verwendung in einem DC-Energiebus.

### Beschreibung der Erfindung

Diese Aufgabe wird erfindungsgemäß gelöst durch eine Gleisfeld-Energieversorgungseinrichtung gemäß Patentanspruch 1 und ein Verfahren gemäß Patentanspruch 14.

Eine erfindungsgemäße Gleisfeld-Energieversorgungseinrichtung weist mindestens eine Schutzvorrichtung zum Schutz einer elektrischen Gleisfeld-Infrastruktur vor AC-Beeinflussungsspannungen auf, wobei die Schutzvorrichtung umfasst: eine auf positivem Potential liegende Leitungsader (positive Leitungsader), eine auf negativem Potential liegende Leitungsader (negative Leitungsader), eine Spannungsbegrenzungseinrichtung umfassend eine erste spannungsrichtungsabhängige elektronische Schalteinrichtung und eine zweite spannungsrichtungsabhängige elektronische Schalteinrichtung, wobei die spannungsrichtungsabhängigen elektronischen Schalteinrichtungen eine Diodenfunktion aufweisen, wobei die erste spannungsrichtungsabhängige elektronische Schalteinrichtung zwischen der auf positiven Potential liegende Leitungsader und Erde verschaltet ist und ohne elektromagnetische Beeinflussung in Richtung von der auf positivem Potential liegender Leitungsader zum Erdpotential sperrt, wobei die zweite spannungsrichtungsabhängige elektronische Schalteinrichtung zwischen der auf negativem Potential liegende Leitungsader und Erde verschaltet ist und ohne Beeinflussung in Richtung von Erdpotential zu der auf negativem Potential liegende Leitungsader sperrt.

Die erfindungsgemäße Schutzvorrichtung ist mit einer niederimpedanten Verbindung zum Erdpotential (Erdschiene oder Ähnliches) verbaut und weist mindestens einen Anschluss zur positiven Leitungsader und mindestens einen Anschluss zur negativen Leitungsader auf.

Durch die erfindungsgemäße Verschaltung der spannungsrichtungsabhängigen Schalteinrichtungen wird erreicht, dass das Potential der positiven Ader nie unter das Erdpotential verschoben wird und dass das Potential der negativen Ader nie über das Erdpotential verschoben wird. Dadurch kann ein an den Leitungsadern angeschlossener Verbraucher vor hohen Spannungen gegenüber dem Erdpotential durch Beeinflussungsspannungen effektiv geschützt werden.

Sobald eine Leitungsader Erdpotential erreicht, wird die entsprechende spannungsrichtungsabhängige Schalteinrichtung leitend und stellt eine niederimpedante Verbindung zum Erdpotential dar. Die erfindungsgemäße Schutzeinrichtung bewirkt also einen kurzzeitigen einseitigen Erdschluss (Erdschluss einer der Leitungsadern) der IT-Energieversorgungseinrichtung.

Bei der Schutzeinrichtung handelt es sich insbesondere um eine Eingangs- und/oder Ausgangsschutzeinrichtung, also eine Schutzeinrichtung, die den Eingang bzw. den Ausgang (je nach Speisungsrichtung) einer Komponente einer Gleisfeld-Infrastruktur schützt.

Eine spannungsrichtungsabhängige elektronische Schalteinrichtung mit Diodenfunktion umfasst mindestens ein elektronisches Element, das in Abhängigkeit von der an ihm anliegenden Spannung hochohmig oder niederohmig ist. Dabei kann es sich um ein aktives oder ein passives elektronisches Bauelement handeln. Vorzugsweise handelt es sich bei den spannungsrichtungsabhängigen elektronischen Schalteinrichtungen um Dioden oder steuerbare Schalter, insbesondere geschaltete Transistoren. Im Falle von Dioden ist die Kathode der ersten Diode mit der positiven Leitungsader verbunden, während die Anode der ersten Diode auf Erdpotential liegt; die Anode der zweiten Diode mit der negativen Leitungsader verbunden, während die Kathode der zweiten Diode auf Erdpotential liegt. Im Normalbetrieb (also ohne Beeinflussungsspannung) sind die Schalteinrichtungen also in Sperrrichtung verschaltet (also hochohmig). Eine Schalteinrichtung kann auch mehrere in Serie geschaltete spannungsrichtungsabhängige elektronische Elemente umfassen.

Bei einer vorteilhaften Ausführungsform der erfindungsgemäßen Gleisfeld-Energieversorgungseinrichtung ist zur Strombegrenzung zumindest eine der spannungsrichtungsabhängige elektronische Schalteinrichtung mit einem Widerstand in Serie geschaltet. Der in Serie geschaltete Widerstand verhindert, dass die Schalteinrichtung durchbrennt, wenn neben einem Erdschluss gleichzeitig auch Traktionsrückströme über Erde fließen. Es können auch mehrere Widerstände zu der spannungsrichtungsabhängigen elektronischen Schalteinrichtung in Serie geschaltet sein.

Eine besonders bevorzugte Ausführungsform der erfindungsgemäßen Gleisfeld-Energieversorgungseinrichtung umfasst eine Schutzvorrichtung, die aufweist: eine erste Überspannungsschutzeinrichtung, wobei die erste Überspannungsschutzeinrichtung zwischen der positiven Leitungsader der Versorgungsleitung und Erdpotential elektrisch verschaltet ist, und eine zweite Überspannungsschutzeinrichtung, wobei die zweite Überspannungsschutzeinrichtung zwischen der negativen Leitungsader der Versorgungsleitung und Erdpotential elektrisch verschaltet ist. Dabei bildet die erste Überspannungsschutzeinrichtung mit der ersten Schalteinrichtung sowie die zweite Überspannungsschutzeinrichtung mit der zweiten Schalteinrichtung jeweils eine Parallelschaltung. Auf diese Weise können durch Blitzereignisse hervorgerufen Überspannungen reduziert werden.

Die erfindungsgemäße Schutzvorrichtung kann als separate Einheit oder integriert in einer Muffe zur galvanischen Verbindung von Leitungsstücken vorliegen.

Die erfindungsgemäße Gleisfeld-Energieversorgungseinrichtung umfasst eine Speisung, mindestens die DC-Versorgungsleitung und mindestens die zuvor beschriebene Schutzvorrichtung, wobei die Leitungsadern Teil der DC-Versorgungsleitung sind, die mit der Speisung elektrisch verbunden ist und von der Speisung mit Energie versorgt wird.

Bei der Gleisfeld-Energieversorgungseinrichtung handelt es sich um eine Installation mit der Netzform Isolée Terre (IT). Durch die erfindungsgemäße Schutzvorrichtung wird bei einer Spannungsverschiebung durch eine überlagerte Spannung über das Erdpotential hinaus (bei positiver Leitungsader in negative Richtung, bei negativer Leitungsader in positiver Richtung) eine temporäre einseitige Spannungsbegrenzung mittels eines einseitigen Erdschlusses bewirkt, was zu einem temporären Verlust der IT-Eigenschaften der Energieversorgungseinrichtung führt.

Bei der erfindungsgemäßen Gleisfeld-Energieversorgungseinrichtung ist vorgesehen, dass der Speisung eine Balancier-Widerstandsbaugruppe zwischen positiver und negativer Leitungsader der DC-Versorgungsleitung nachgeschaltet ist, wobei die Balancier-Widerstandsbaugruppe zwei identische, in Serie geschaltete Widerstandseinheiten umfasst und der Mittelabgriff der Balancier-Widerstandsbaugruppe auf Erdpotential liegt. Hierdurch wird bewirkt, dass die aufgrund der IT-Eigenschaft der Energieversorgungseinrichtung 'floatende' DC Spannung gegenüber dem Erdpotential bei intakter Isolation (also ohne Effekt der induktiven Beeinflussung) gleichmässig verteilt ist. Das heisst, sowohl die Spannung der positiven Leitungsader gegenüber Erdpotential, als auch die Spannung der negativen Leitungsader gegenüber Erdpotential beträgt betragsmäßig die Hälfte der DC Einspeise-Spannung. Eine Widerstandseinheit kann mehrere widerstandsbehaftete Bauteile umfassen.

Eine Verschiebung der Spannungsverhältnisse gibt Auskunft über die Isolationsverhältnisse in der Anlage. Vorzugsweise sind daher Messeinheiten zur Messung der über den Widerstandseinheiten abfallenden Spannungen vorgesehen. Mittels der Messeinheiten können Verschiebungen der Potentiale der Leitungsader gegenüber dem Erdpotential erfasst werden. Hierdurch können Isolationsfehler erkannt sowie deren Ausmaß abgeschätzt werden. Zusätzlich kann zur Isolationsüberwachung ein Isolationsmonitor für IT-Netze eingesetzt werden.

Bei einer besonders bevorzugten Ausführungsform ist die DC-Versorgungsleitung eine Busleitung.

Dabei ist vorzugsweise die Busleitung durch Busankoppelelemente in Bussegmente unterteilt, wobei jedes Busankoppelelement weitere Schalteinrichtungen (Segmentierungsschalter) zur elektrischen Trennung der Busleitung umfasst.

Die Busankoppelelemente umfassen vorzugsweise mindestens ein Einspeise-Busankoppelelement zur Anbindung der Speisung an die Busleitung und mindestens ein Verbraucher-Busankoppelelement zur Anbindung eines Verbrauchers an die Busleitung.

Bei einer speziellen Ausführungsform ist die Balancier-Widerstandsbaugruppe Teil des Einspeise-Busankoppelelements. Hierdurch kann eine kompakte Bauweise der Komponenten erreicht werden.

Um die Verbraucher-Busankoppelelemente auch bei einer beidseitigen Einspeisung zu schützen, ist es bevorzugt, dass auf jeder Seite eines Verbraucher-Busankoppelelements je eine Schutzeinrichtung angeordnet ist. Zwischen zwei Verbraucher-Busankoppelelementen sind also vorzugsweise zwei Schutzvorrichtungen elektrisch mit dem durch die beiden Verbraucher-Busankoppelelemente begrenzten Bussegment verschaltet.

Darüber hinaus ist es vorteilhaft, wenn auf der der Speisung abgewandten Seite des Einspeise-Busankoppelelements eine Schutzeinrichtung angeordnet ist. Auf diese Weise kann auch die Speisung vor Beeinflussungsspannungen bzw. Beeinflussungsströmen geschützt werden.

Alternativ zu einer in Bussegmente unterteilten Busleitungen kann es sich bei der Busleitung um eine galvanisch durchverbundene Busleitung handeln.

Vorzugsweise sind auch bei einer galvanisch durchverbundenen Busleitung mehrere Schutzvorrichtungen vorgesehen. Diese sind vorzugsweise einige Kilometer voneinander beabstandet.

Die Erfindung betrifft ferner ein Verfahren zum Betrieb einer Gleisfeld-Energieversorgungseinrichtung (8, 8'), bei dem eine selbsttätige spannungsabhängige Potentialbegrenzung erfolgt, insbesondere abhängig von den Vorzeichen der Spannungen der Leitungsadern gegenüber Erdpotential.

Erfindungsgemäß werden dabei mittels einer Balancier-Widerstandsbaugruppe die Potentiale der Leitungsadern symmetrisch um das Erdpotential eingestellt. Vorzugsweise erfolgt eine Isolationsfehler-Offenbarung durch Messung der über den Widerstandseinheiten abfallenden Spannungen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Figur 1: zeigt eine Basisausführung einer erfindungsgemäßen Schutzeinrichtung.
- Figur 2: zeigt eine erfindungsgemäße Schutzeinrichtung mit Überspannungsschutz.
- Figur 3: zeigt eine erfindungsgemäße Gleisfeld-Energieversorgungseinrichtung mit einer segmentierten Busleitung.
- Figur 4: zeigt eine Speisung und ein Einspeise-Busankoppelelement mit integrierter Balancier-Widerstandsbaugruppe.
- Figur 5: zeigt den Verlauf der Spannung der Adern gegenüber Erdpotential einer erfindungsgemäßen Gleisfeld-Energieversorgungseinrichtung mit vorhandener Gleichtakt(common mode)-Beeinflussungsspannung.
- Figur 6: zeigt eine erfindungsgemäße Schutzeinrichtung mit Strombegrenzung bei Erdschluss.
- Figur 7: zeigt eine erfindungsgemäße Gleisfeld-Energieversorgungseinrichtung mit einer galvanisch durchverbundenen Busleitung.

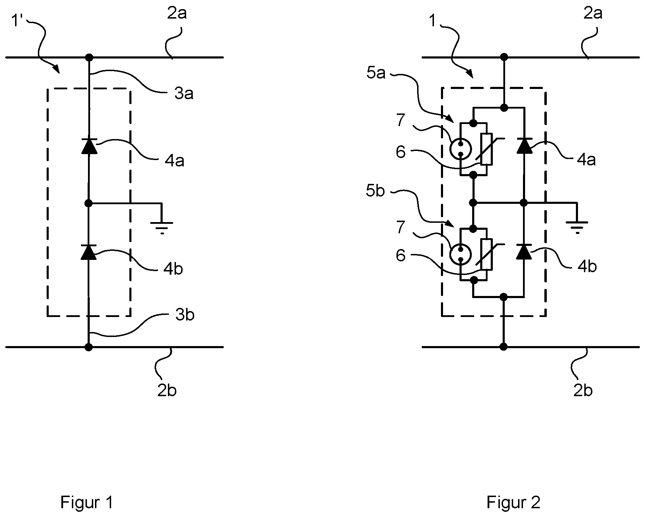

**Figur 1** und **Figur 2** zeigen zwei Ausführungsformen einer erfindungsgemäßen Schutzvorrichtung **1, 1'.** Die Schutzvorrichtungen 1, 1' umfassen eine auf positivem Potential liegende Leitungsader (positive Leitungsader **2a**) und eine auf negativem Potential liegenden Leitungsader (negative Leitungsader **2b**) einer Energieversorgungseinrichtung (in Figur 1 und Figur 2 nicht gezeigt). Von jeder Leitungsader 2a, 2b geht eine galvanisch mit der jeweiligen Leitungsader 2a, 2b verbundene Stichleitung **3a, 3b** ab, die auf Erdpotential endet. Die Stichleitungen 3a, 3b umfassen jeweils eine spannungsrichtungsabhängige elektronische Schalteinrichtung (hier: Dioden **4a, 4b**). Die erste Diode 4a ist zwischen der positiven Leitungsader 2a und Erde so verschaltet, dass sie ohne elektromagnetische Beeinflussung in Richtung von der positiven Leitungsader 2a zum Erdpotential sperrt. Analog hierzu ist die zweite Diode 4b zwischen der negativen Leitungsader 2b und Erde so verschaltet, dass sie ohne elektromagnetische Beeinflussung in Richtung vom Erdpotential zur negativen Leitungsader 2b sperrt. Sind die Leitungsadern 2a, 2b der Energieversorgungseinrichtung also keiner Beeinflussungsspannung ausgesetzt, haben die Dioden 4a, 4b der Schutzvorrichtungen 1, 1' eine sperrende Wirkung und es erfolgt kein Stromabfluss über die Erdverbindung der Stichleitungen 3a, 3b. Wird das Spannungsverhältnis zwischen einer Leitungsader 2a, 2b und dem Erdpotential durch eine Beeinflussungsspannung so beeinflusst, dass sich das Vorzeichen des Potentials der entsprechenden Leitungsader 2a, 2b gegenüber dem Erdpotential ändert, wird die sperrende Wirkung der zugehörigen Diode 4a, 4b aufgehoben. Es entsteht ein einseitiger Erdschluss. Die erfindungsgemäßen Schutzvorrichtungen 1, 1' erzeugen also einen einseitigen Erdschluss, wenn die Beeinflussungsspannung einen Vorzeichenwechsel des Potentialunterschieds zwischen einer der Leitungsadern 2a, 2b und dem Erdpotential bewirkt.

Bei der in **Figur 2** gezeigten besonders bevorzugten Ausführungsform der erfindungsgemäßen Schutzvorrichtung 1 ist parallel zu jeder spannungsrichtungsabhängigen Schalteinrichtung 4a, 4b eine Überspannungsschutzeinrichtung **5a, 5b** verschaltet. Die Überspannungsschutzeinrichtungen 5a, 5b sind also ebenfalls zwischen einer der Leitungsadern 2a, 2b und Erde angeschlossen. Die Überspannungsschutzeinrichtungen 5a, 5b umfassen jeweils eine Parallelschaltung eines Varistors **6** und eines Überspannungsableiters **7.** Durch die Überspannungsschutzeinrichtungen 5a, 5b soll vermieden werden, dass ein Energieeintrag, z. B. durch Blitzeinschlag, Schäden an elektronischen Komponenten der Energieversorgungseinrichtung verursacht.

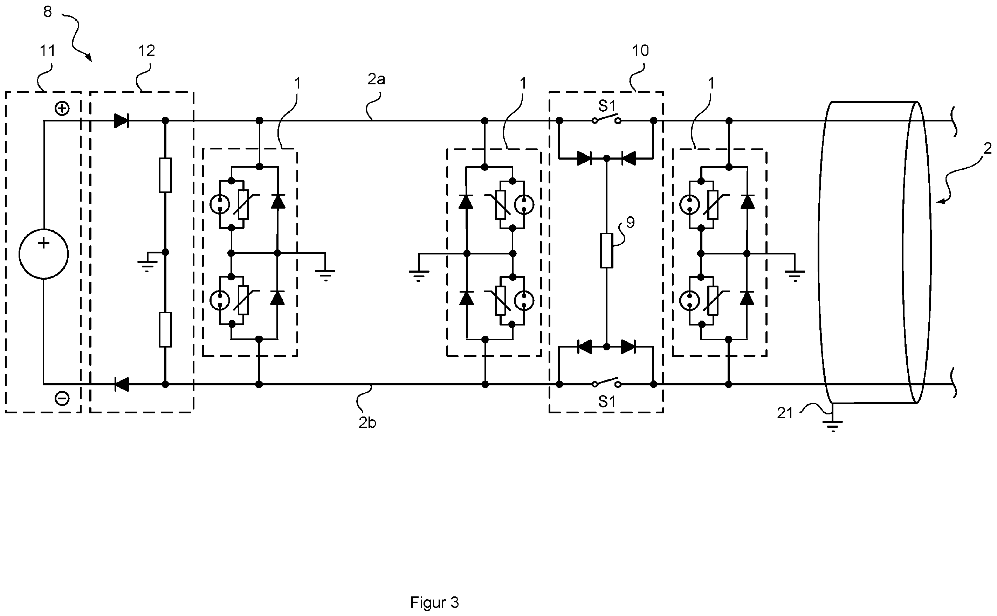

**Figur 3** zeigt eine erfindungsgemäße Energieversorgungseinrichtung **8,** bei der die in Figur 2 gezeigte Schutzvorrichtung 1 verwendet wird. Die Leitungsadern 2a, 2b der in Figur 3 gezeigten Energieversorgungseinrichtung 8 sind Teil einer Busleitung **2,** welche den Verbraucher **9** mit Energie versorgt. Die Energieversorgungseinrichtung 8 umfasst darüber hinaus einen Erdanschluss **21,** der mit einer niederimpedanten Verbindung zur Systemerde (Erdschiene oder ähnliches) verbaut ist. Die Busleitung 2 kann neben den Leitungsadern 2a, 2b noch weitere Leitungsadern umfassen (nicht gezeigt). Die Ummantelung der Busleitung 2 ist der Übersichtlichkeit halber in Figur 3 schematisch nur für einen Abstand entlang der Energieversorgungseinrichtung 8 dargestellt.

Die Verbraucher 9 sind über Verbraucher-Busankoppelelemente 10 an die Busleitung 2 angeschlossen. Über Segmentierungsschalter **S1** kann die Busleitung in Bussegmente unterteilt werden. Die Energieversorgungseinrichtung 8 umfasst darüber hinaus eine DC-Speisung **11,** über die die Verbraucher 9 mit Energie versorgt werden.

Prinzipiell wäre es ausreichend, Schutzvorrichtungen 1 in vorbestimmten Abständen in der Busleitung 2 vorzusehen. Die Abstände werden dabei vorzugsweise so gewählt, dass die Beeinflussung aufgrund von zu erwartenden Überlagerungen der Spannungen nicht zur Überschreitung von für den Anlagenschutz vorgegebenen Grenzwerten führt. Um jedoch auch bei einer galvanisch getrennten Busleitung (mit geöffneten Segmentierungsschalter S1 im Verbraucher-Busankoppelelement 10) die Komponenten der Energieversorgungseinrichtung 8 vor Beeinflussungsspannung zu schützen, ist in der in Figur 3 gezeigten Ausführungsform der erfindungsgemäßen Energieversorgungseinrichtung 8 vor jedem Verbraucher-Busankoppelelement eine Schutzvorrichtung 1 vorgesehen.

Darüber hinaus kann vorgesehen sein, dass die Energieversorgungseinrichtung 8 neben der in Figur 3 gezeigten DC-Speisung 11 eine oder mehrere weitere Speisung(en) aufweisen kann, um eine beidseitige Speisung der Verbraucher 9 zu realisieren (bidirektional betriebene Energieversorgungseinrichtung). In diesem Fall sollte, wie in Figur 3 gezeigt, auf jeder Seite des Verbraucher-Busankoppelelements 10 (d. h. sowohl auf der der Speisung 11 zugewandten Seite als auch der der Speisung 11 abgewandten Seite) eine erfindungsgemäße Schutzvorrichtung 1 angeschlossen sein. Auf diese Weise wird das Verbraucher-Busankoppelelement 10 auch bei beidseitiger Speisung effektiv vor unzulässig hohen Beeinflussungsspannungen geschützt. Die Schutzvorrichtungen 1 bilden dann sowohl einen Eingangsschutz als auch einen Ausgangsschutz.

Die erfindungsgemäße Schutzvorrichtung 1 wird bei der erfindungsgemäßen Energieversorgungseinrichtung 8 auch als Ausgangsschutz für die Speisung 11 verwendet. Dazu ist der Speisung 11 eine Schutzvorrichtung 1 nachgeschaltet.

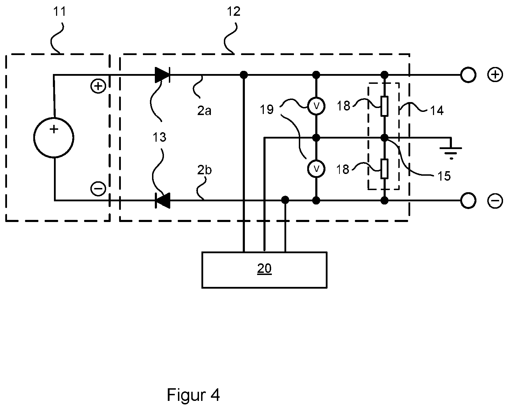

Die Anbindung der Speisung 11 an die Busleitung 2 wird vorzugsweise über ein Einspeise-Busankoppelelement **12** realisiert, wie in **Figur 4** detailliert dargestellt. Die der Speisung nachgeschaltete Schutzvorrichtung 1 ist vorzugsweise auf der der Speisung 11 abgewandten Seite des Einspeise-Busankoppelelements angeschlossen und kann, wie in Figur 4 gezeigt, Teil des Einspeise-Busankoppelelements 12 sein. Ein Dioden-Paar **13** in den Leitungsadern 2a, 2b verhindert Rückströme in die Speisung 11, bspw. für den Fall, dass höhere Spannung aus verteilten, redundanten Speisungen an der Energieversorgungseinrichtung anliegen, wenn diese bidirektional betrieben wird.

Um die von der Speisung 11 zur Verfügung gestellte Spannung gegenüber dem Erdpotential gleichmäßig zu verteilen, ist eine Balancier-Widerstandsbaugruppe **14** vorgesehen, die der Speisung 11 nachgeschaltet ist und vorzugsweise Teil des Einspeise-Busankoppelelements 12 ist, wie in Figur 4 dargestellt. Die Balancier-Widerstandsbaugruppe 14 ist parallel zur Speisung 11 geschaltet. Sie umfasst zwei Widerstandseinheiten **18** und zwischen den Widerstandseinheiten 18 einen Mittelabgriff **15** der auf Erdpotential liegt. Hierdurch wird sichergestellt, dass die Spannung der positiven Leitungsader 2a und die Spannung der negativen Leitungsader 2b bei intakter Isolation (also ohne Auswirkungen der induktiven Beeinflussung) betragsmäßig ähnlich groß sind, sich jedoch im Vorzeichen unterscheiden.

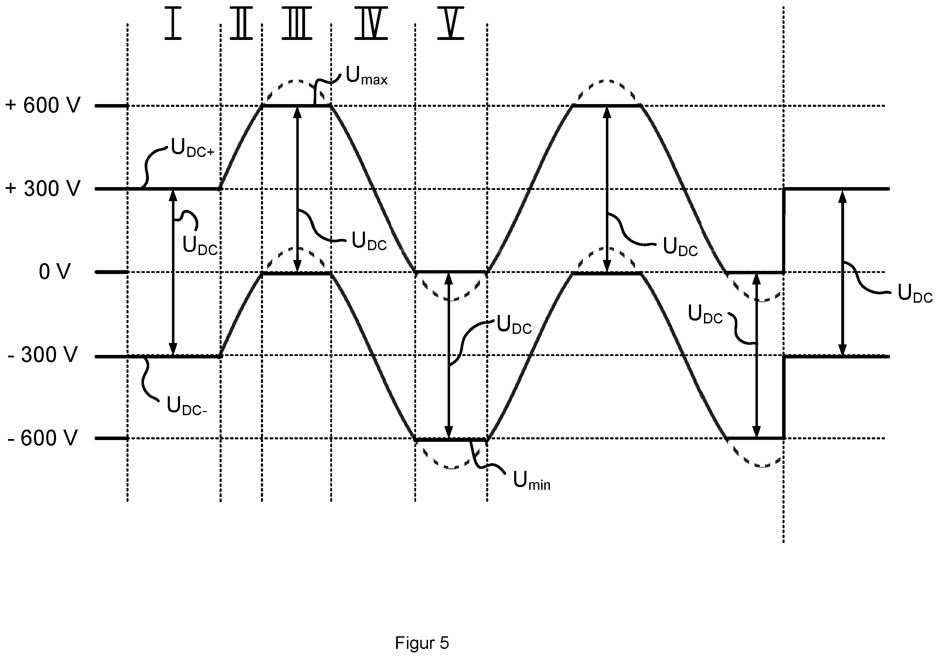

In **Figur 5** ist der Verlauf der Potentiale der positiven Leitungsader 2a und der negativen Leitungsader 2b der in Figur 3 gezeigten Energieversorgungseinrichtung 8 während einer Beeinflussung mit einer sinusförmigen Beeinflussungsspannung am Beispiel eines Fahrleitungskurzschlusses dargestellt. Die von der Speisung 11 zur Verfügung gestellte und zwischen den beiden Leitungsadern 2a, 2b anliegende Spannung U_{DC} (Potentialdifferenz) beträgt im gezeigten Beispiel 600 V.

Durch die Balancier-Widerstandsbaugruppe 14 sind die Potentiale U_{DC+}, U_{DC-} der Leitungsadern 2a, 2b symmetrisch um das Erdpotential verteilt.

Zu Beginn **(I)** liegt keine Beeinflussung vor, sodass das Potential Uoc+-der positiven Leitungsader 2a +300 V und das Potential U_{DC} der negativen Leitungsader 2b - 300 V beträgt. Tritt nun eine Beeinflussung auf, führt dies dazu, dass sich die Potentiale U_{DC+}, U_{DC-}der Leitungsadern 2a, 2b gegenüber dem Erdpotential verschieben, wobei die Spannung U_{DC-}zwischen den Leitungsadern 2a, 2b konstant bleibt. Im gezeigten Beispiel werden die Potentiale U_{DC+}, U_{DC-} der Leitungsader 2a, 2b zunächst zu höheren Werten verschoben **(II).** Ist die Beeinflussungsspannung nun so hoch, dass das Potential U_{DC-} der negativen Leitungsader 2a das Erdpotential zu überschreiten droht, wird die Diode 4b der Schutzeinrichtung 1 leitend und stellt eine niederimpedante Verbindung zum Erdpotential dar **(III),** so lange bis die Potentialverschiebung aufgrund der Beeinflussungsspannung wieder so gering ist, dass das Potential der negativen Leitungsader 2b sich wieder im negativen Bereich bewegt **(IV).** Das Potential U_{DC+} der positiven Leitungsader 2a überschreitet also ein Maximalpotential Uₘₐₓ=U_{DC} nicht. Analog hierzu wird die Diode 4a der Schutzeinrichtung 1 leitend, wenn das Potential der positiven Leitungsader 2a das Erdpotential zu unterschreiten droht **(V).** Das Potential U_{DC-} der negativen Leitungsader 2b unterschreitet also ein Minimalpotential Uₘᵢₙ=-U_{DC} nicht. Die erfindungsgemäße Schutzvorrichtung 1 sorgt also dafür, dass die Spannungsverschiebung begrenzt wird, wenn die Beeinflussungsspannung so groß wird, dass sie einen Vorzeichenwechsel des Potentials einer der Leitungsadern 2a, 2b bewirken würden. Die kurzzeitigen Situationen, in denen eine der spannungsrichtungsabhängigen elektronischen Schalteinrichtungen 4a, 4b leitend sind, entsprechen einem kurzzeitigen, einseitigen Erdschluss der IT-Energieversorgungseinrichtung 8.

Neben der Begrenzung der Spannungsverschiebung bei einer elektromagnetischen Beeinflussung, ist es auch wichtig, eine solche hohe Beeinflussung zu detektieren, damit diese Ereignisse auch im Stromversorgungssystem protokolliert werden. Dies wird bei dem in Figur 4 gezeigten Einspeise-Busankoppelelement 12 realisiert, indem die Spannung über den einzelnen Widerstandseinheiten 18 der Balancier-Widerstandsbaugruppe 14 gemessen werden. Dazu sind entsprechende Messeinheiten **19** parallel zu den Widerstandseinheiten 18 verschaltet. Unterscheiden sich die Spannungen über den Widerstandseinheiten mehr als ein zuvor bestimmter akzeptabler Grenzwert, ist davon auszugehen, dass eine elektromagnetische Beeinflussung stattfindet. Zusätzlich kann ein Isolationsmonitor **20** zwischen den Leitungsadern 2a, 2b angeschlossen sein.

Als spannungsrichtungsabhängige elektronische Schalteinrichtungen 4a, 4b werden vorzugsweise PN Dioden verwendet.

Die Beeinflussung erfolgt immer auf beiden Leitungsadern 2a, 2b. Es handelt sich also um eine «Common Mode-Beeinflussung». Daher werden die beiden Dioden 4a, 4b nie gleichzeitig leitend (was einem Kurzschluss entsprechen würde).

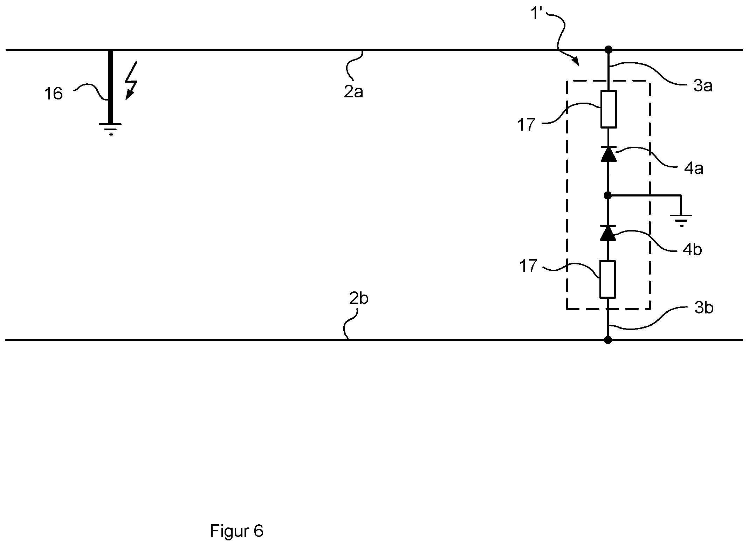

Für den Fall, dass ein externer (nicht gewollter) Erdschluss **16** auftritt, kann die Schutzeinrichtung 1, 1' dazu dienen, den durch den Erdschluss 16 in der betroffenen Leitungsader 2a, 2b fließenden Strom zu begrenzen. Dazu ist bei einer speziellen in **Figur 6** gezeigten Ausführungsform in den Stichleitungen 3a, 3b jeweils ein Strombegrenzungswiderstand 17 zu den spannungsrichtungsabhängigen elektronischen Schalteinrichtungen 4a, 4b in Serie geschaltet.

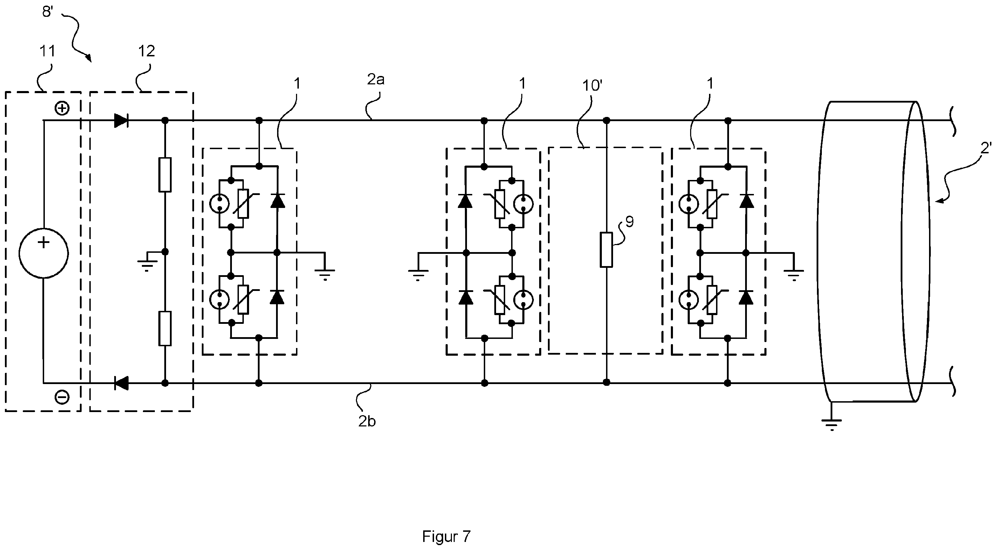

Neben der in Fig. 3 dargestellten segmentierten Busleitung 2 kann die erfindungsgemäße Schutzvorrichtung auch bei einer Energieversorgungseinrichtung **8'** mit einer dauerhaft galvanisch durchverbundenen Busleitung **2'** eingesetzt werden, wie in **Fig. 7** gezeigt. Die Verbraucherbusankoppelelemente 10' weisen hier keine Schaltelemente zur Trennung der Busleitung auf. Die Abstände der Schutzvorrichtungen 1, 1' können hier flexibler gewählt werden.

### Bezugszeichenliste

- 1, 1': Schutzvorrichtungen
- 2: DC-Versorgungsleitung - segmentierte Busleitung
- 2': DC-Versorgungsleitung - galvanisch durchverbundene Busleitung
- 2a: positive Leitungsader
- 2b: negative Leitungsader
- 3a, 3b: Stichleitungen
- 4a, 4b: spannungsrichtungsabhängige elektronische Schalteinrichtungen, insbesondere Dioden
- 5a, 5b: Überspannungsschutzeinrichtung
- 6: Varistors
- 7: Überspannungsableiter
- 8: Energieversorgungseinrichtung mit segmentierter Busleitung
- 8': Energieversorgungseinrichtung mit dauerhaft galvanisch durchverbundener Busleitung
- 9: Verbraucher
- 10: Verbraucher-Busankoppelelement - segmentierte Busleitung
- 10': Verbraucher-Busankoppelelement - galvanisch durchverbundene Busleitung
- 11: DC-Speisung
- 12: Einspeise-Busankoppelelement
- 13: Dioden-Paar zur Vermeidung von Rückströmen in die Speisung
- 14: Balancier-Widerstandsbaugruppe
- 15: Mittelabgriff der Balancier-Widerstandsbaugruppe
- 16: Erdschluss bewirkt durch äußere Umstände
- 17: Strombegrenzungswiderstand
- 18: Widerstandseinheit der Balancier-Widerstandsbaugruppe
- 19: Messeinheiten, Spannungsmessgeräte
- 20: Isolationsmonitor
- 21: Erdanschluss
- S1: weitere Schalteinrichtungen (Segmentierungsschalter)
- U_{DC}: von DC-Speisung zur Verfügung gestellte Spannung
- U_{DC+}: Potential der positiven Leitungsader
- U_{DC-}: Potential der negativen Leitungsader
- Uₘₐₓ: maximales Potential der positiven Leitungsader
- Uₘᵢₙ: minimales Potential der negativen Leitungsader

### Literaturverzeichnis

[1] EP 3 247 015 A1
[2] Ril 819.0804
   Blitz- und Überspannungsschutz von LST-Anlagen; 15.03.2018
[3] DB Netze TM 2-2020-10352
   Betriebserprobung A04: Grundschaltung Längsspannungsentkoppler
[4] DB Netze
   ESTW-NeuPro - Lastenheft für die Stromversorgung ESTW-NeuPro
[5] WO 84/02807 A1
[6] ES 2 532 288 A2

## Patentansprüche

1. Gleisfeld-Energieversorgungseinrichtung (8, 8') umfassend eine DC-Speisung (11), mindestens eine DC-Versorgungsleitung (2, 2') und mindestens eine Schutzvorrichtung (1, 1'), wobei die Schutzeinrichtung (1, 1') umfasst:
eine auf positivem Potential liegende und eine auf negativem Potential liegende Leitungsader (2a, 2b),
eine Spannungsbegrenzungseinrichtung umfassend eine erste spannungsrichtungsabhängige elektronische Schalteinrichtung (4a) und eine zweite spannungsrichtungsabhängige elektronische Schalteinrichtung (4b),
wobei die spannungsrichtungsabhängigen elektronischen Schalteinrichtungen (4a, 4b) eine Diodenfunktion aufweisen,
wobei die erste spannungsrichtungsabhängige elektronische Schalteinrichtung (4a) zwischen der auf positivem Potential liegende Leitungsader (2a) und Erde verschaltet ist und ohne elektromagnetische Beeinflussung in Richtung von der auf positivem Potential liegender Leitungsader (2a) zum Erdpotential sperrt,
wobei die zweite spannungsrichtungsabhängige elektronische Schalteinrichtung (4b) zwischen der auf negativem Potential liegenden Leitungsader (2b) und Erde verschaltet ist und ohne Beeinflussung in Richtung von Erdpotential zu der auf negativem Potential liegende Leitungsader (2b) sperrt,
wobei die Leitungsadern (2a, 2b) Teil der DC-Versorgungsleitung (2, 2') sind, die mit der Speisung (11) elektrisch verbunden ist und von der Speisung (11) mit Energie versorgt werden,
**dadurch gekennzeichnet,**
**dass** der Speisung (11) eine Balancier-Widerstandsbaugruppe (14) zwischen positiver und negativer Leitungsader (2a, 2b) der DC-Versorgungsleitung (2) nachgeschaltet ist, wobei die Balancier-Widerstandsbaugruppe (14) zwei identische, in Serie geschaltete Widerstandseinheiten (18) umfasst und der Mittelabgriff (15) der Balancier-Widerstandsbaugruppe (14) auf Erdpotential liegt.

2. Gleisfeld-Energieversorgungseinrichtung (8, 8') nach Anspruch 1, **dadurch gekennzeichnet, dass** es sich bei den spannungsrichtungsabhängigen elektronischen Schalteinrichtungen (4a, 4b) um Dioden oder steuerbare Schalter, insbesondere geschaltete Transistoren handelt.

3. Gleisfeld-Energieversorgungseinrichtung (8, 8') nach einem der vorhergehenden Ansprüche, **dadurch gekennzeichnet, dass** zur Strombegrenzung zumindest eine der spannungsrichtungsabhängigen elektronischen Schalteinrichtungen (4a, 4b) mit einem Widerstand (17) in Serie geschaltet ist.

4. Gleisfeld-Energieversorgungseinrichtung (8, 8') nach einem der vorhergehenden Ansprüche, **dadurch gekennzeichnet, dass** die Schutzvorrichtung (1, 1') weiter umfasst:
eine erste Überspannungsschutzeinrichtung (5a), wobei die erste Überspannungsschutzeinrichtung (5a) zwischen der positiven Leitungsader (2a) der Versorgungsleitung (2) und Erdpotential elektrisch verschaltet ist;
eine zweite Überspannungsschutzeinrichtung (5b), wobei die zweite Überspannungsschutzeinrichtung (5b) zwischen der negativen Leitungsader (2b) der Versorgungsleitung (2) und Erdpotential elektrisch verschaltet ist;
wobei die erste Überspannungsschutzeinrichtung (5a) mit der ersten Schalteinrichtung (4a) sowie die zweite Überspannungsschutzeinrichtung (5b) mit der zweiten Schalteinrichtung (4b) jeweils eine Parallelschaltung bilden.

5. Gleisfeld-Energieversorgungseinrichtung nach einem der vorhergehenden Ansprüche, **dadurch gekennzeichnet, dass** Messeinheiten (19) zur Messung der über den Widerstandseinheiten (18) abfallenden Spannungen vorgesehen sind.

6. Gleisfeld-Energieversorgungseinrichtung (8, 8') nach einem der vorhergehenden Ansprüche, **dadurch gekennzeichnet, dass** die DC-Versorgungsleitung (2) eine Busleitung ist.

7. Gleisfeld-Energieversorgungseinrichtung (8) nach Anspruch 6, **dadurch gekennzeichnet, dass** die Busleitung (2) durch Busankoppelelemente (10, 12) in Bussegmente unterteilt ist, wobei jedes Busankoppelelement (10, 12) weitere Schalteinrichtungen (S1) zur elektrischen Trennung der Busleitung (2) umfasst.

8. Gleisfeld-Energieversorgungseinrichtung (8) nach Anspruch 7, **dadurch gekennzeichnet, dass** die Busankoppelelemente mindestens ein Einspeise-Busankoppelelement (12) zur Anbindung der Speisung (11) an die Busleitung (2) und mindestens ein Verbraucher-Busankoppelelement (10) zur Anbindung eines Verbrauchers (9) an die Busleitung (2) umfassen.

9. Gleisfeld-Energieversorgungseinrichtung (8) nach Anspruch 8, **dadurch gekennzeichnet, dass** die Balancier-Widerstandsbaugruppe (14) Teil des Einspeise-Busankoppelelements (12) ist.

10. Gleisfeld-Energieversorgungseinrichtung (8) nach Anspruch 8 oder 9 **dadurch gekennzeichnet, dass** auf jeder Seite eines Verbraucher-Busankoppelelement (10) je eine Schutzeinrichtung (1) angeordnet ist.

11. Gleisfeld-Energieversorgungseinrichtung (8) nach einem der Ansprüche 8 bis 10, **dadurch gekennzeichnet, dass** auf der der Speisung (11) abgewandten Seite des Einspeise-Busankoppelelements (12) eine Schutzeinrichtung (1, 1') angeordnet ist.

12. Gleisfeld-Energieversorgungseinrichtung (8') nach Anspruch 6, **dadurch gekennzeichnet, dass** es sich bei der Busleitung (2') um eine galvanisch durchverbundene Busleitung handelt.

13. Gleisfeld-Energieversorgungseinrichtung (8, 8') nach einem der Ansprüche 1 bis 12, **dadurch gekennzeichnet, dass** mehrere Schutzvorrichtungen vorgesehen sind, die vorzugsweise einige Kilometer voneinander beabstandet sind.

14. Verfahren zum Betrieb einer Gleisfeld-Energieversorgungseinrichtung (8, 8') nach einem der vorhergehenden Ansprüche, **dadurch gekennzeichnet, dass** eine selbsttätige spannungsabhängige Potentialbegrenzung erfolgt, insbesondere abhängig von den Vorzeichen der Spannungen der Leitungsadern (2a, 2b) gegenüber Erdpotential,
**dadurch gekennzeichnet,**
**dass** mittels einer Balancier-Widerstandsbaugruppe (14) die Potentiale der Leitungsadern (2a, 2b) symmetrisch um das Erdpotential eingestellt werden.

## Claims

1. A track-field power supply apparatus (8, 8') comprising a DC feed (11), at least one DC supply line (2, 2') and at least one protective device (1, 1'), wherein the protective apparatus (1, 1') comprises:
a line conductor (2a, 2b) which is at a positive potential and at a negative potential,
a voltage limiting apparatus comprising a first voltage direction-dependent electronic switching apparatus (4a) and a second voltage direction-dependent electronic switching apparatus (4b),
wherein the voltage direction-dependent electronic switching apparatuses (4a, 4b) have a diode function,
wherein the first voltage direction-dependent electronic switching apparatus (4a) is connected between the line conductor (2a) which is at a positive potential and the ground and without electromagnetic interference blocking in the direction from the line conductor (2a) which is at a positive potential to the ground potential,
wherein the second voltage direction-dependent electronic switching apparatus (4b) is connected between the line conductor (2b) which is at a negative potential and the ground and without interference blocking in the direction from ground potential to the line conductor (2b) which is at a negative potential,
wherein the line conductors (2a, 2b) are part of the DC supply line (2, 2') which is electrically connected to the feed (11) and are supplied with energy by the feed (11),
**characterized in that**
a balancing resistor assembly (14) between the positive and negative line conductors (2a, 2b) of the DC supply line (2) is downstream of the feed (11), the balancing resistor assembly (14) comprising two identical series-connected resistor units (18) and the center tap (15) of the balancing resistor assembly (14) being at ground potential.

2. The track-field power supply apparatus (8, 8') according to claim 1, **characterized in that** the voltage direction-dependent electronic switching apparatuses (4a, 4b) are diodes or controllable switches, in particular switched transistors.

3. The track-field power supply apparatus (8, 8') according to either of the preceding claims, **characterized in that** for current limitation, at least one of the voltage direction-dependent electronic switching apparatuses (4a, 4b) is connected in series with a resistor (17).

4. The track-field power supply apparatus (8, 8') according to any of the preceding claims, **characterized in that** the protective device (1, 1') further comprises:
a first surge protection apparatus (5a), the first surge protection apparatus (5a) being electrically connected between the positive line conductor (2a) of the supply line (2) and ground potential;
a second surge protection apparatus (5b), the second surge protection apparatus (5b) being electrically connected between the negative line conductor (2b) of the supply line (2) and ground potential;
wherein the first surge protection apparatus (5a) together with the first switching apparatus (4a) and the second surge protection apparatus (5b) together with the second switching apparatus (4b) respectively form a parallel connection.

5. The track-field power supply apparatus according to any of the preceding claims, **characterized in that** measuring units (19) are provided for measuring the voltages dropping across the resistor units (18).

6. The track-field power supply apparatus (8, 8') according to any of the preceding claims, **characterized in that** the DC supply line (2) is a bus line.

7. The track-field power supply apparatus (8) according to claim 6, **characterized in that** the bus line (2) is divided into bus segments by bus coupling elements (10, 12), each bus coupling element (10, 12) comprising further switching apparatuses (S1) for electrical isolation of the bus line (2).

8. The track-field power supply apparatus (8) according to claim 7, **characterized in that** the bus coupling elements comprise at least one feed-bus coupling element (12) for connecting the feed (11) to the bus line (2) and at least one consumer-bus coupling element (10) for connecting a consumer (9) to the bus line (2).

9. The track-field power supply apparatus (8) according to claim 8, **characterized in that** the balancing resistor assembly (14) is part of the feed-bus coupling element (12).

10. The track-field power supply apparatus (8) according to claim 8 or 9, **characterized in that** a protective apparatus (1) is arranged on each side of a consumer-bus coupling element (10).

11. The track-field power supply apparatus (8) according to any of claims 8 to 10, **characterized in that** a protective apparatus (1, 1') is arranged on the side of the feed-bus coupling element (12) facing away from the feed (11).

12. The track-field power supply apparatus (8') according to claim 6, **characterized in that** the bus line (2') is a galvanically connected bus line.

13. The track-field power supply apparatus (8, 8') according to any of claims 1 to 12, **characterized in that** multiple protective devices are provided which are preferably spaced apart from one another by a few kilometers.

14. A method for operating a track-field power supply apparatus (8, 8') according to any of the preceding claims, **characterized in that** automatic voltage-dependent potential limitation takes place, in particular depending on the polarity signs of the voltages of the line conductors (2a, 2b) relative to ground potential,
**characterized in that**
the potentials of the line conductors (2a, 2b) are set symmetrically around the ground potential by means of a balancing resistor assembly (14).

## Revendications

1. Dispositif d'alimentation en énergie d'une voie ferrée (8, 8') comprenant une alimentation en courant continu (11), au moins une ligne d'alimentation en courant continu (2, 2') et au moins un appareil de protection (1, 1'), dans lequel le dispositif de protection (1, 1') comprend :
un fil conducteur se trouvant à un potentiel positif et un fil conducteur se trouvant à un potentiel négatif (2a, 2b),
un dispositif de limitation de tension comprenant un premier dispositif de commutation électronique (4a) dépendant du sens de la tension et un second dispositif de commutation électronique (4b) dépendant du sens de la tension,
dans lequel les dispositifs de commutation électroniques (4a, 4b) dépendant du sens de la tension présentent une fonction de diode,
dans lequel le premier dispositif de commutation électronique (4a) dépendant du sens de la tension est connecté entre le fil conducteur (2a) se trouvant à un potentiel positif et la terre et bloque sans influence électromagnétique dans le sens du fil conducteur (2a) se trouvant à un potentiel positif vers le potentiel de terre,
dans lequel le second dispositif de commutation électronique (4b) dépendant du sens de la tension est connecté entre le fil conducteur (2b) se trouvant à un potentiel négatif et la terre et bloque sans influence dans le sens du potentiel de terre vers le fil conducteur (2b) se trouvant à un potentiel négatif,
dans lequel les fils conducteurs (2a, 2b) font partie de la ligne d'alimentation en courant continu (2, 2') qui est reliée électriquement à l'alimentation (11) et sont alimentés en énergie par l'alimentation (11),
**caractérisé en ce**
**qu'**un module de résistance d'équilibrage (14) est monté en aval de l'alimentation (11) entre les fils conducteurs (2a, 2b) positif et négatif de la ligne d'alimentation en courant continu (2), dans lequel le module (14) de résistance d'équilibrage comprend deux unités de résistance (18) identiques montées en série et la prise médiane (15) du module de résistance d'équilibrage (14) se trouvant au potentiel de terre.

2. Dispositif d'alimentation en énergie d'une voie ferrée (8, 8') selon la revendication 1, **caractérisé en ce que** les dispositifs de commutation électroniques (4a, 4b) dépendant du sens de la tension sont des diodes ou des commutateurs commandables, en particulier des transistors commutés.

3. Dispositif d'alimentation en énergie d'une voie ferrée (8, 8') selon l'une des revendications précédentes, **caractérisé en ce que,** pour la limitation du courant, au moins l'un des dispositifs de commutation électroniques (4a, 4b) dépendant du sens de la tension est monté en série avec une résistance (17).

4. Dispositif d'alimentation en énergie d'une voie ferrée (8, 8') selon l'une des revendications précédentes, **caractérisé en ce que** l'appareil de protection (1, 1') comprend en outre :
un premier dispositif de protection contre les surtensions (5a), dans lequel le premier dispositif de protection contre les surtensions (5a) est connecté électriquement entre le fil conducteur (2a) positif de la ligne d'alimentation (2) et le potentiel de terre ;
un second dispositif de protection contre les surtensions (5b), dans lequel le second dispositif de protection contre les surtensions (5b) est connecté électriquement entre le fil conducteur (2b) négatif de la ligne d'alimentation (2) et le potentiel de terre ;
dans lequel le premier dispositif de protection contre les surtensions (5a) et le premier dispositif de commutation (4a) d'une part ainsi que le second dispositif de protection contre les surtensions (5b) et le second dispositif de commutation (4b) d'autre part forment respectivement un circuit parallèle.

5. Dispositif d'alimentation en énergie d'une voie ferrée selon l'une des revendications précédentes, **caractérisé en ce que** des unités de mesure (19) sont prévues pour la mesure des tensions qui chutent aux bornes des unités de résistance (18).

6. Dispositif d'alimentation en énergie d'une voie ferrée (8, 8') selon l'une des revendications précédentes, **caractérisé en ce que** la ligne d'alimentation en courant continu (2) est une ligne de bus.

7. Dispositif d'alimentation en énergie d'une voie ferrée (8) selon la revendication 6, **caractérisé en ce que** la ligne de bus (2) est divisée en segments de bus par des éléments de couplage de bus (10, 12), dans lequel chaque élément de couplage de bus (10, 12) comprend d'autres dispositifs de commutation (S1) pour la séparation électrique de la ligne de bus (2).

8. Dispositif d'alimentation en énergie d'une voie ferrée (8) selon la revendication 7, **caractérisé en ce que** les éléments de couplage de bus comprennent au moins un élément de couplage de bus d'injection (12) pour la liaison de l'alimentation (11) à la ligne de bus (2) et au moins un élément de couplage de bus de réception (10) pour la liaison d'un récepteur (9) à la ligne de bus (2).

9. Dispositif d'alimentation en énergie d'une voie ferrée (8) selon la revendication 8, **caractérisé en ce que** le module de résistance d'équilibrage (14) fait partie de l'élément de couplage de bus d'injection (12).

10. Dispositif d'alimentation en énergie d'une voie ferrée (8) selon la revendication 8 ou 9, **caractérisé en ce qu'**un dispositif de protection (1) est disposé de chaque côté d'un élément de couplage de bus de réception (10).

11. Dispositif d'alimentation en énergie d'une voie ferrée (8) selon l'une des revendications 8 à 10, **caractérisé en ce qu'**un dispositif de protection (1, 1') est disposé sur le côté de l'élément de couplage de bus d'injection (12) qui est opposé à l'alimentation (11).

12. Dispositif d'alimentation en énergie d'une voie ferrée (8') selon la revendication 6, **caractérisé en ce que** la ligne de bus (2') est une ligne de bus à interconnexion galvanique.

13. Dispositif d'alimentation en énergie d'une voie ferrée (8, 8') selon l'une des revendications 1 à 12, **caractérisé en ce que** plusieurs appareils de protection sont prévus, de préférence écartés les uns des autres de quelques kilomètres.

14. Procédé permettant de faire fonctionner un dispositif d'alimentation en énergie d'une voie ferrée (8, 8') selon l'une des revendications précédentes, **caractérisé en ce qu'**une limitation automatique de potentiel dépendant de la tension est effectuée, en particulier en fonction des signes des tensions des fils conducteurs (2a, 2b) par rapport au potentiel de terre,
**caractérisé en ce**
**qu'**au moyen d'un module de résistance d'équilibrage (14), les potentiels des fils conducteurs (2a, 2b) sont mis en place symétriquement autour du potentiel de terre.
